# EUROPÄISCHE PATENTSCHRIFT

(11) **EP 1 854 903 B1**
(45) Veröffentlichungstag und Bekanntmachung des Hinweises auf die Patenterteilung: **02.10.2013**
(21) Anmeldenummer: 07104103.2
(22) Anmeldetag: 14.03.2007
(51) Int. Cl.: C23C 4/02, B23K 26/36

(54) **Verfahren zur Herstellung verschleißfester Beschichtungen auf einem Metallgrundkörper**
Method for manufacturing wear-resistant coatings on a metal base
Procédé de fabrication de revêtements résistant à l'usure sur un corps de base métallique

(30) Priorität: 08.05.2006 DE 102006021634
(43) Veröffentlichungstag der Anmeldung: 14.11.2007
(73) Patentinhaber: Ford-Werke GmbH, 50735 Köln (DE)
(72) Erfinder: Verpoort, Clemens Maria, 40789, Monheim (DE); Wesemann, Juergen, 52146, Würselen (DE); Kunze, Rudolf, 50259, Pulheim (DE)
(74) Vertreter: Drömer, Hans-Carsten

(56) Entgegenhaltungen:
- EP-A- 1 304 446
- WO-A-96/33837
- DD-A1- 242 638
- DE-A1- 10 241 846
- DE-A1- 19 614 328
- JP-A- 61 163 258
- JP-A- 62 056 562
- US-A1- 2005 235 493

## Beschreibung

Die Erfindung betrifft ein Verfahren zur Herstellung verschleißfester Beschichtungen auf einem Metallgrundkörper.

Gattungsgemäße Verfahren zur Herstellung verschleißfester Beschichtungen sowie die entsprechenden Beschichtungen sind beispielsweise aus den Schriften US5592927, US5663124 und US5766693(A) bekannt. Bekanntes Problem ist die Erzielung genügend hoher Haftfestigkeiten zwischen dem Metallgrundkörper, der überwiegend aus Leichtmetall besteht, und der aufgespritzten, in der Regel überwiegend eisenhaltigen Beschichtung. Um eine hohe Haftfestigkeit zu erzielen, ist es erforderlich, die zu beschichtende Fläche äußerst sorgfältig zu reinigen. Weiterhin wird eine Aufrauhung der zu beschichtenden Fläche angestrebt, um die Haftung zwischen Metallgrundkörper und Beschichtung zu verbessern.

Ein bekanntes Verfahren zur Aufrauhung von Oberflächen stellt die mechanische Bearbeitung dar. Dies kann z.B. sein Trockenhonen, Knurling, Drehen oder Dreh-Fräsen, oder das Wasserstrahlaufrauhen oder das Korundstrahlen. Bei allen diesen Prozessen kann es zu einer Kontamination der Oberfläche kommen im Zeitraum zwischen der mechanischen Vorbearbeitung und dem späteren thermischen Spritzen der Beschichtung. Insbesondere die Kontamination mit Öl und Ölnebel, z.B. aus Honbearbeitung, wirkt sich störend auf die Haftung der Beschichtung aus.

Reinigungsverfahren mittels Druckluft und/oder geeigneter Spülmittel sind relativ aufwendig, garantieren jedoch keine absolute Sauberkeit der zu beschichtenden Fläche. Eine Verbesserung stellt die Reinigung der zu beschichtenden Fläche mittels des sogenannten Open-Air-Plasma Verfahrens dar. Erfahrungsgemäß steigen damit die Haftwerte der Beschichtung an. Jedoch kann das Open-Air-Plasma Verfahren lediglich das anhaftende Öl entfernen, nicht aber die Leichtmetall-Oberfläche, insbesondere bei Verwendung von Aluminium für den Metallgrundkörper, angreifen und aufrauen.

Aus der JP 62-56562, der US 2005/0235493 und der DD 242638 sind Verfahren zur Reinigung und zum Aufrauhen von metallischen Oberflächen als Vorbereitung für das Auftragen ein thermisch gespritzter Schichten offenbart, bei denen die Reinigung und das Aufrauhen mittels eines Lasers hoher Energiedichte erfolgt. Die Haftung der metallischen Oberfläche zur aufgespritzten Schicht hängt dabei von der in die Oberfläche mittels des Lasers eingebrannten bzw. eingeschmolzenen Oberflächenstruktur ab.

In der WO 96/33837 ist ein Verfahren zur Oberflächenvorbereitung eines Werkstückes mit einem metallischen Trägermaterial beschrieben, bei welchem mittels eines Laserstrahls Vertiefungen mit einer vorbestimmten geometrischen Form in die Oberfläche eingearbeitet werden.

Aus der DE19614328 A1 ist ein weiteres Verfahren zum Vorbehandeln einer Werkstücks-Oberfläche für eine anschließende thermische Beschichtung bekannt. Eine, z.B. durch Bohren hergestellte Oberfläche mit einem leicht wellenförmigen Oberflächenprofil wird mittels einer Laserstrahlbehandlung strukturiert. Bei schräg auf die Oberfläche auftreffenden Laserstrahlen entstehen Rillen und Vertiefungen, die teilweise Hinterschnitte aufweisen.

Ausgehend von diesem Stand der Technik ist es die Aufgabe der Erfindung, ein Verfahren zur Herstellung verschleißfester Beschichtungen auf einem Metallgrundkörper bereitzustellen, so daß die hergestellte Beschichtung eine hohe Haftfestigkeit zum Metallgrundkörper aufweist und das Herstellverfahren insgesamt einfach und kostengünstig durchgeführt werden kann. Im letzteren Fall soll insbesondere der Reinigungsprozeß der zu beschichtenden Oberfläche vereinfacht werden.

Gelöst wird diese Aufgabe mit den Merkmalen des Anspruchs 1, dadurch

kann eine sehr haftfeste Beschichtung auf den Metallgrundkörper aufgebracht werden, die gegenüber den bisher bekannten Verfahren zur Herstellung einer verschleißfesten Beschichtungen einen wesentlich einfacheren und kostengünstigeren Reinigungs- bzw. Aufrauhprozeß beinhaltet.

Durch die Laserstrahlbehandlung der zu beschichtenden Fläche kann in einem Arbeitsgang das anhaftende Öl aus einer vorhergehenden Bearbeitungsstufe entfernt werden und, wenn die Energie des Laserstrahls hoch genug ist, die Oberfläche der zu beschichtenden Fläche aufgerauht werden. Mit höherer Energiedichte des Laserstrahls ergibt sich eine steigende Rauhigkeit: Je höher diese Rauhigkeit ist, desto höher ist der Haftfestigkeitswert der späteren aufgespritzten Beschichtung. Damit kann in einem Arbeitsgang die zu beschichtende Fläche zuverlässig gereinigt werden und gleichzeitig entsprechend den Festigkeitsanforderungen eine ent-sprechende Aufrauhung der zu beschichtenden Fläche erzielt werden. Weiterhin erfolgt durch die Laserstrahlbehandlung zumindest teilweise eine Reduzierung der für die Haftfestigkeit schädlichen Oxid- bzw. Korrosionsschicht auf der zu beschich-tenden Fläche.

Als bevorzugte Verfahrung zu Auftragung der Beschichtung sind dabei thermische Spritzverfahren geeignet, die als Ausgangsmaterial der Beschichtung Pulver oder Draht verwenden, und bei denen dieses Ausgangsmaterial mittels Lichtbogenspritzens oder mittels Plasmaspritzens auf die zu beschichtende Fläche aufgebracht wird. Diese Verfahren stellen bewährte Beschichtungsverfahren dar, die schon seit mehreren Jahren erprobt und zwischenzeitlich im industriellen Einsatz sind.

Die mechanische Aufrauhung erfolgt, indem in die zu beschichtende Fläche Rillen eingebracht werden. Dies können Rillen in Anspruch 1 beanspruchten Formen und Abmessungen sein, die sich aus der mechanischen Bearbeitung ergeben beim Fräsen oder beim Drehen. Damit kann die zu beschichtende Fläche des Metallgrundkörpers durch einfache und bekannte Verfahren mechanisch vorbearbeitet und auf das erforderliche Maß gebracht werden. Gleichzeitig dient diese mechanische Vorbearbeitung der Erzeugung der mechanischen Aufrauhung. Geeignete Rillenabmessungen sind Tiefen von 0,02 bis 0,5 mm und Rillenabstände von 0,05 bis 1 mm. Besonders vorteilhaft sind Rillentiefen zwischen 0,05 bis 0,1 mm bei einer Rillenbreite von 0,05 bis 0,080 mm und einem Rillenabstand von 0,1 bis 0,150 mm.

Die Rillen weisen Hinterschnitte auf. Dann ergibt sich neben der intermetallischen Bindung zwischen Metallgrundkörper und Beschichtung noch eine mechanische Verhakung der Beschichtung im Metallgrundkörper.

Die Rillen weisen zumindest teilweise annähernd senkrechte Flanken auf. Solche senkrechten Flanken können auftreten bei unsymmetrischen, z. B. sägezahnförmigen oder U-förmigen Rillenquerschnitten.
Werden diese senkrechten Flanken mit dem Laser aufgerauht, ergeben sich nach dem Verfahren von Anspruch 1 Hinterschnitte, die zu einer mechanischen Verhakung der Beschichtung mit dem Metallgrundkörper führen. Dies erhöht die Haftfestigkeit zwischen Metallgrundkörper und Beschichtung erheblich.

Bevorzugt erfolgt die Laserstrahlbehandlung der zu beschichtenden Fläche unmittelbar vor der Auftragung der Beschichtung. Unter dieser zeitnahen Ausführung ist ein Zeitintervall von weniger als 5 min zwischen Laserstrahlbehandlung und Aufspritzen der Beschichtung zu verstehen. Dies hat den Vorteil, dass keine weiteren Maßnahmen zur Sauberhaltung der zu beschichtenden Fläche getroffen werden muß und sich die Bildung der natürlichen Oxidschicht auf der zu beschichtenden Fläche, insbesondere bei Verwendung von Leichtmetallen, in Grenzen hält. Vorteilhaft ist, wenn die Laserstrahlbehandlung in einem Arbeitschritt mit dem Aufbringen der Beschichtung erfolgt. Diese kann z. B. dadurch erfolgen, indem der Laserstrahl in einigem Abstand vor der Beschichtungseinrichtung über die zu beschichtende Fläche geführt wird.

Als Vorteilhaft hat sich herausgestellt, wenn der Laserstrahl gepulst ist. Durch die abwechselnde Intensität entsteht eine unregelmäßige Oberflächenstruktur auf der zu beschichtenden Fläche, die eine höhere mechanische Verhakung von Metallgrundkörper und Beschichtung ermöglicht. Besonders vorteilhaft hat sich dabei eine Pulsfrequenz 10 bis 50 kHz herausgestellt. Dies wurde erreicht mit einer Feststoff-Laser-Leistung von 120 Watt eines Nd-YAG Lasers mit einer Wellenlänge von 1064 nm. Durch Wahl der Pulsfrequenz kann die lokale Intensität verändert werden und zwar vom Modus "Flächenhaftes Reinigen" auf "Laser-Aufrauhen" bzw. "Laser-Strukturieren" mit Erzeugung erhöhter Rauhigkeit. Unter dem Mikroskop wird sichtbar, dass über die vorhandene makroskopische Aufrauhung durch die mechanische Bearbeitung, z. B. der Drehoperation, die feinere Laseraufrauhung bzw. Laserstrukturierung gelegt wird. Diese Laseraufrauhung führt zu einer Steigerung der Haftfestigkeit.

Naheliegend und je nach Anwendungsfall auch sinnvoll ist es, den Laserstrahl überwiegend senkrecht auf die zu beschichtende Fläche auftreffen zu lassen, um eine möglichst hohe Energiekonzentration in der vom Laserstrahl beaufschlagten Bearbeitungszone zu erzielen, wodurch sich eine hohe Reinigungswirkung und eine hohe Aufrauhung ergeben.

Nach der Erfindung wird der Laserstrahl unter einem schrägen Winkel auf die zu beschichtende Fläche gewirkt. Die dabei entstehende Laseraufrauhung bzw. Laserstrukturierung ist jetzt unsymmetrisch, d. h. die Flanken der entstehenden Strukturierungen sind ungleich. Nach Anspruch 1 wird der Laserstrahl dabei so ausgerichtet, dass - senkrecht auf die zu beschichtende Fläche gesehen - Hinterschnitte in der Strukturierung entstehen. Damit wird wieder die mechanische Verhakung zwischen Metallgrundkörper und Beschichtung erhöht und damit die Haftfestigkeit. Als besonders vorteilhaft hat sich ergeben, wenn der Laserstrahl unter einem Winkel von 20° bis 60° auf die zu beschichtende Fläche wirkt.

In einem bevorzugten Verfahren wirkt der Laserstrahl unter verschiedenen Winkeln auf die zu beschichtenden Fläche. Dies wird erreicht, indem der Laserstrahl unterschiedlich abgelenkt bzw. die Laserquelle unterschiedlich ausgerichtet wird. Dies kann auch pendelnd erfolgen, das heißt, der Winkel ändert sich kontinuierlich während der Bearbeitung, oder es erfolgt ein erster Bearbeitungsschritt mit einem ersten Winkel, dann ein zweiter Bearbeitungsschritt mit einem zweiten Winkel usw.

Wird der Laserstrahl unter einem schrägen Winkel angewendet und die zu beschichtende Fläche ist mittels Rillen aufgerauht, wird vorteilhaft der Laserstrahl überwiegend senkrecht zur Längsrichtung der Rillen ausgerichtet. Damit kann der Laserstrahl ein Maximum an Energie in die schrägen Flanken der Rillen eintragen und führt dort zu einer Strukturierung, die vorteilhaft möglichst viele - senkrecht auf die zu beschichtende Fläche gesehen - Hinterschnitte aufweist. Dies führt wieder zu der bereits beschriebenen vorteilhaften mechanischen Verhakung zwischen Beschichtung und Metallgrundkörper.

Anwendung finden kann das Verfahren bei der Herstellung der verschiedensten verschleißfesten Beschichtungen eines Metallgrundkörpers. Insbesondere geeignet ist das Verfahren zur Herstellung der Laufbahnen in den Zylindern eines Motorblocks für einen Verbrennungsmotor. Dann ist der Metallgrundkörper der Zylinderblock des Verbrennungsmotors und die Beschichtung ist in den Zylinderbohrungen aufgebracht. Trotz der beengten Platzverhältnisse in der Zylinderbohrung kann mittels des Lasers sehr einfach die Laserreinigung und -aufrauhung durchgeführt werden, da der Platzbedarf für den Laser selber in der Zylinderbohrung nur gering ist. Aber auch in allen anderen Bohrungen, die eine verschleißfeste Beschichtung erhalten sollen, eignet sich das Verfahren, z. B. für Hydraulikzylinder.

In einer Bohrung eignet sich ein Spiegel zur Umlenkung des Laserstrahls auf die zu beschichtende Fläche. Die Laserstrahlquelle kann dann außerhalb des Metallgrundkörpers, z. B. des Zylinderblocks, verbleiben. Der Spiegel führt die erforderlichen Auf- und Ab- sowie die Drehbewegungen durch, um die zu beschichtende Fläche komplett zu reinigen und aufzurauhen. Falls der Laserstrahl unter einem schrägen Winkel auftreffen soll, kann der Spiegel auch die entsprechenden Kippbewegungen durchführen. Insbesondere eignet sich der Spiegel hervorragend zur Erzeugung einer Pendelbewegung, d. h. durch ein oszillierendes Kippen wird der schräge Winkel des Laserstrahls ständig verändert.

Weitere Einzelheiten der Erfindung ergeben sich aus den Darstellungen. Es zeigen:
Figur 1a eine zu beschichtende Fläche, die mittels eines Laserstrahls gereinigt und aufgerauht wird;
Figur 1b die Fläche aus Figur 1a nach Aufbringen der verschleißfesten Beschichtung;
Figur 2a eine zu beschichtende Fläche mit dreieckförmigen Rillen, die nach dem Stand der Technik mittels eines Laserstrahls gereinigt und aufgerauht wird;
Figur 2b die Fläche aus Figur 2a nach Aufbringen der verschleißfesten Beschichtung;
Figur 3a eine zu beschichtende Fläche mit sägezahnförmigen Rillen, die mittels eines Laserstrahls gereinigt und aufgerauht wird;
Figur 3b die Fläche aus Figur 3a nach Aufbringen der verschleißfesten Beschichtung;
Figur 4a eine zu beschichtende Fläche mit U-förmigen Rillen, die mittels eines Laserstrahls gereinigt und aufgerauht wird; und
Figur 4b die Fläche aus Figur 4a nach Aufbringen der verschleißfesten Beschichtung;

Die Nummerierung ist im folgenden einheitlich, es werden nur unterschiedliche Oberflächenformen der zu beschichtenden Fläche dargestellt, für die das erfinderische Verfahren geeignet sind.

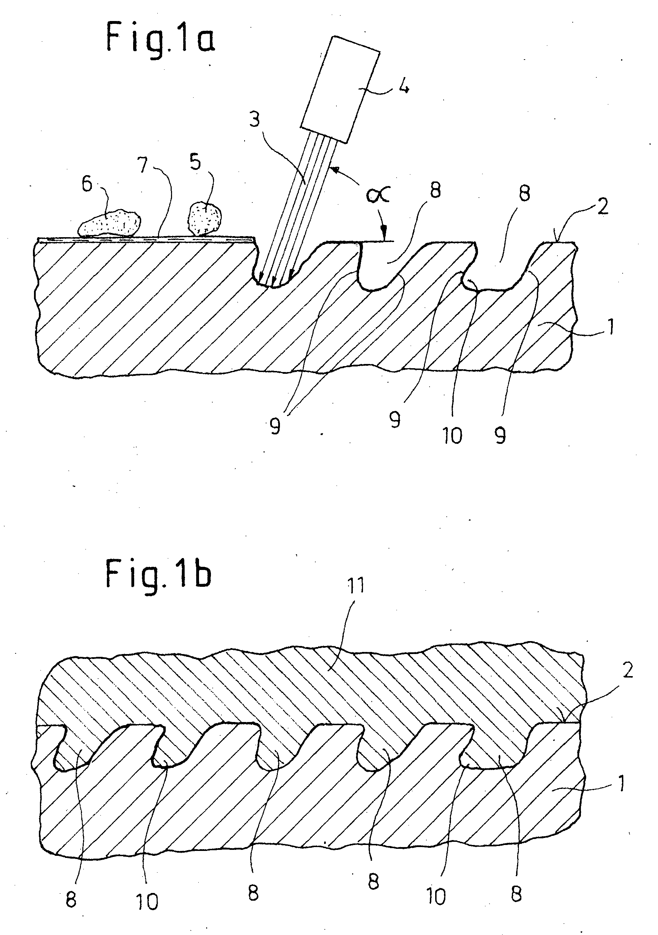

Figur 1a wird ein Metallgrundkörper 1 auf der zu beschichtenden Fläche 2 mit einem Laserstrahl 3 aus der Laserquelle 4 beaufschlagt. Der Laserstrahl 3 beaufschlagt die Fläche 2 unter dem schrägen Winkel α von ungefähr 70°. Durch die Beaufschlagung wird die Fläche 2 zum einen von den Schmutzpartikeln 5 und den Spänen 6 aus der mechanischen Bearbeitung sowie dem Ölfilm 7 gereinigt. Zum anderen entsteht die Laseraufrauhung in Form der Vertiefungen 8. Durch den schrägen Winkel α sind die Flanken 9 der Vertiefungen 8 unterschiedlich steil. Damit entstehen zumindest teilweise auch die von senkrecht gesehenen Hinterschnitte 10.

In Figur 1b ist auf die zu beschichtende Fläche 2 des Metallgrundkörpers 1 die Beschichtung 11 aufgebracht. Durch die Vertiefungen 8 erhöht sich die Verbindungsfläche zwischen Metallgrundkörper 1 und Beschichtung 11, wodurch die Haftfestigkeit zwischen Metallgrundkörper 1 und Beschichtung 11 erhöht wird. Weiter erhöht wird die Haftfestigkeit, indem sich die Beschichtung 11 in den Hinterschnitten 10 gegenüber dem Metallgrundkörper 1 verhakt. Die Hinterschnitte 10 sind dabei in unterschiedlichen Richtungen an den Flanken 9 angeordnet. Dies entsteht, indem der Laserstrahl 3 aus Figur 1a in unterschiedlichen Richtungen und unterschiedlichen Winkeln α auf die zu beschichtende Fläche 2 trifft.

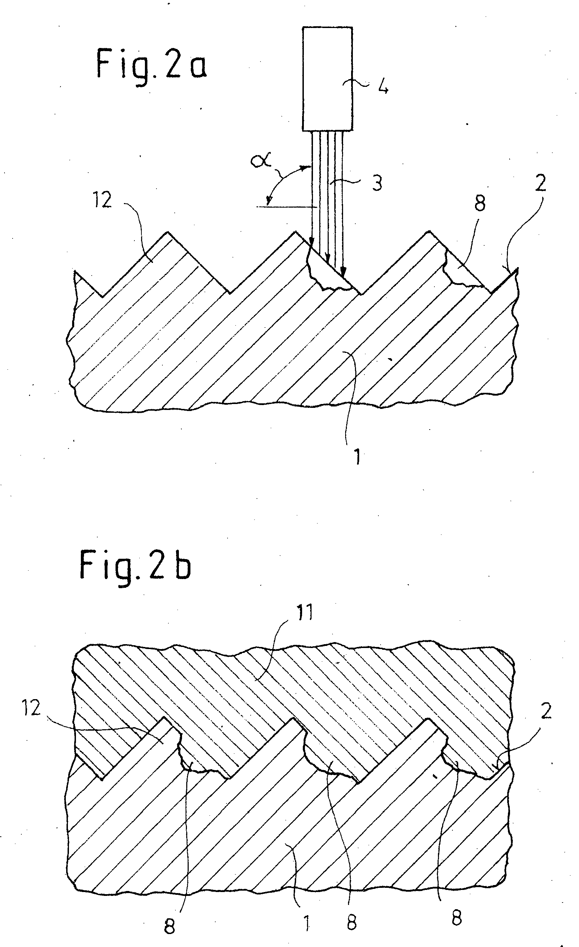

Figur 2a und 2b zeigt die Anwendung des Verfahrens nach dem Stand der Technik auf eine zu beschichtende Fläche 2 mit dreieckförmigen Rillen mit den Rillenzacken 12. Der Laserstrahl 3 trifft hier annähernd senkrecht unter dem Winkel α von etwa 90° auf die zu beschichtende Fläche 2 auf. Obwohl hier kaum Hinterschnitte entstehen, ist doch durch die Vertiefungen 8 eine gute Haftfestigkeit zwischen Metallgrundkörper 1 und Beschichtung 11 gegeben.

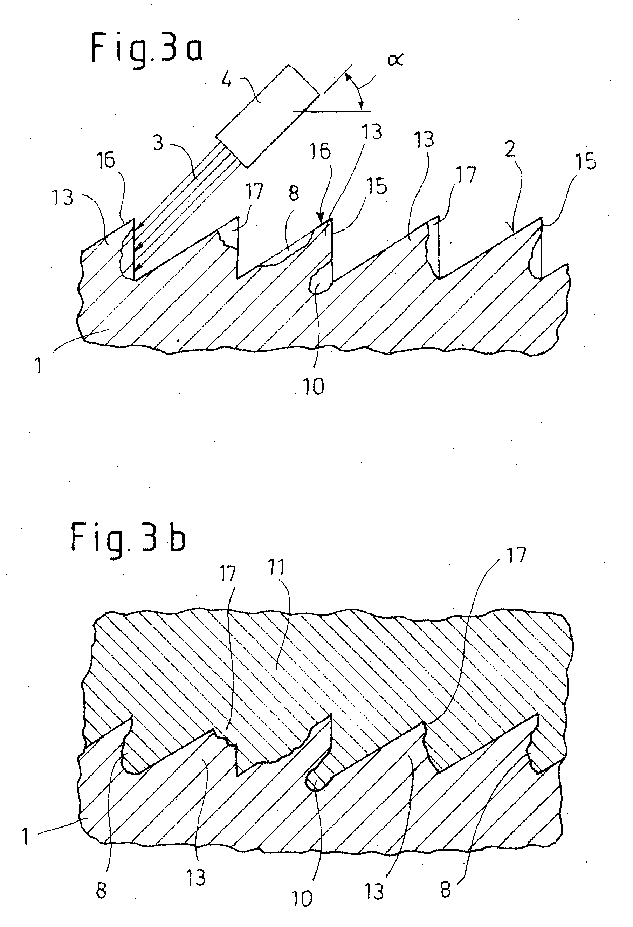

Figur 3a und 3b zeigt die Anwendung des Verfahrens auf eine zu beschichtende Fläche 2 mit sägezahnförmigen Rillen mit den Rillenzacken 13. Der Laserstrahl 3 trifft unter verschiedenen Winkeln auf die zu beschichtende Fläche 2 auf, wobei ein Winkel α von etwa 45° dargestellt ist. Hierbei entstehen Hinterschnitte 10 vor allem an den steilen Flanken 15 der Rillenzacken 13, während an den flachen Flanken 16 der Rillenzacken 13 im wesentlichen Vertiefungen 8 entstehen. Teilweise werden auch die Spitzen 17 der Rillenzacken 13 abgetragen, was aber die Haftfestigkeit insgesamt nicht beeinflusst, da insgesamt genügende Hinterschnitte 10 und Vertiefungen 8 vorhanden sind. Insgesamt ergibt sich somit eine gute Haftfestigkeit zwischen Metallgrundkörper 1 und Beschichtung 11.

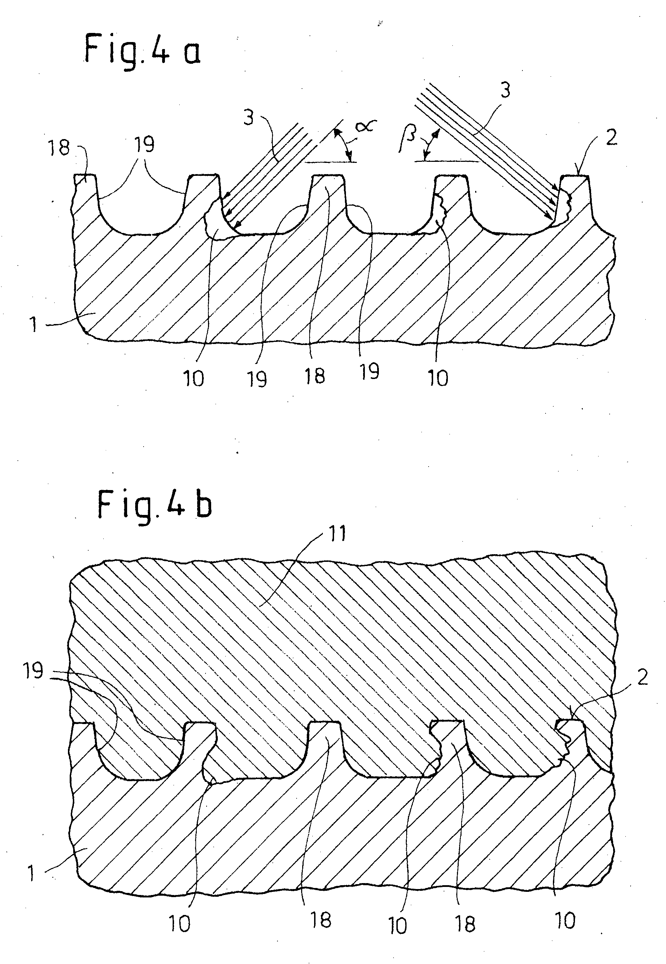

Figur 4a und 4b zeigt die Anwendung des Verfahrens auf eine zu beschichtende Fläche 2 mit U-förmigen Rillen mit den Rillenstegen 18. Diese sind so ausgeformt, dass sie zumindest abschnittsweise annähernd senkrechte Flanken 19 aufweisen, wobei als senkrecht die Richtung relativ zur Fläche 2 ohne Berücksichtigung der Rillen zu verstehen ist. Der Laserstrahl 3 trifft unter verschiedenen Winkeln auf die zu beschichtende Fläche 2 auf, wobei hier ein Winkel α von 45° und ein Winkel β von 40° in die andere Richtung dargestellt ist. Hierbei entstehen beabsichtigt gegenüberliegende Hinterschnitte 10 vor allem am Fuß der senkrechten Flanken 19. Diese entgegengesetzt angeordneten Hinterschnitte 10 bewirken eine sehr starke Verklammerung der Beschichtung 11 mit dem Metallgrundkörper 1. Insgesamt ergibt sich somit eine außerordentlich hohe Haftfestigkeit zwischen Metallgrundkörper 1 und Beschichtung 11.

## Patentansprüche

1. Verfahren zur Herstellung verschleißfester Beschichtungen auf einem Metallgrundkörper, insbesondere aus Leichtmetall, **gekennzeichnet durch** die Verfahrensschritte
- mechanisches Aufrauhen der zu beschichtenden Fläche auf dem Metallgrundkörper, indem in die zu beschichtende Fläche Rillen **durch** Drehen oder Fräsen eingebracht werden, wobei die Rillen zumindest teilweise annähernd senkrechte Flanken aufweisen und die Rillentiefe 0,02 bis 0,5 mm und der Rillenabstand 0,05 bis 1 mm beträgt,
- Reinigen und Aufrauhen der zu beschichtenden Fläche mittels eines Laserstrahls, wobei **durch** den Laserstrahl Hinterschnitte in die annähernd senkrechten Flanken der Rillen eingebracht werden, wobei der Laserstrahl unter einem schrägen Winkel auf die zu beschichtende Fläche wirkt; und
- Auftragung einer verschleißfesten Beschichtung mittels eines thermischen Spritzverfahrens.

2. Verfahren nach Anspruch 1,
**dadurch gekennzeichnet, daß**
die Rillentiefe 0,05 bis 0,1 mm bei einer Rillenbreite von 0,05 bis 0,080 mm und einem Rillenabstand von 0,1 bis 0,150 mm beträgt.

3. Verfahren nach einem der vorherigen Ansprüche,
**dadurch gekennzeichnet, daß**
die Laserstrahlbehandlung der zu beschichtenden Fläche unmittelbar vor der der Auftragung der Beschichtung erfolgt, insbesondere in einem Arbeitsschritt.

4. Verfahren nach einem der vorherigen Ansprüche,
**dadurch gekennzeichnet, daß**
der Laserstrahl gepulst ist.

5. Verfahren nach Anspruch 4,
**dadurch gekennzeichnet, daß**
die Pulsfrequenz 10 bis 50 kHz beträgt.

6. Verfahren nach einem der vorherigen Ansprüche,
**dadurch gekennzeichnet, daß**
der Laserstrahl unter einem Winkel von 20° bis 60° auf die zu beschichtende Fläche wirkt.

7. Verfahren nach einem der vorherigen Ansprüche,
**dadurch gekennzeichnet, daß**
der Laserstrahl unter verschiedenen Winkeln auf die zu beschichtende Fläche wirkt.

8. Verfahren nach einem der vorherigen Ansprüche,
**dadurch gekennzeichnet, daß**
bei dem thermische Spritzverfahren als Ausgangsmaterial der Beschichtung Pulver oder Draht verwendet werden, und dieses Ausgangsmaterial mittels Lichtbogenspritzens oder mittels Plasmaspritzens auf die zu beschichtende Fläche aufgebracht wird.

## Claims

1. Process for producing wear-resistant coatings on a metal base body, in particular made of light metal, **characterized by** the process steps of
- mechanical roughening of the surface to be coated on the metal base body by introducing grooves into the surface to be coated by turning or milling, the grooves having at least partially approximately perpendicular flanks and the groove depth being 0.02 to 0.5 mm and the groove spacing being 0.05 to 1 mm,
- cleaning and roughening of the surface to be coated by means of a laser beam, the laser beam introducing undercuts into the approximately perpendicular flanks of the grooves, the laser beam acting on the surface to be coated at an oblique angle; and
- applying a wear-resistant coating by means of a thermal spraying process.

2. Process according to Claim 1,
**characterized in that**
the groove depth is 0.05 to 0.1 mm given a groove width of 0.05 to 0.080 mm and a groove spacing of 0.1 to 0.150 mm.

3. Process according to one of the preceding claims,
**characterized in that**
the laser beam treatment of the surface to be coated is effected immediately before the application of the coating, in particular in one working step.

4. Process according to one of the preceding claims,
**characterized in that**
the laser beam is pulsed.

5. Process according to Claim 4,
**characterized in that**
the pulse frequency is 10 to 50 kHz.

6. Process according to one of the preceding claims,
**characterized in that**
the laser beam acts on the surface to be coated at an angle of 20° to 60°.

7. Process according to one of the preceding claims,
**characterized in that**
the laser beam acts on the surface to be coated at various angles.

8. Process according to one of the preceding claims,
**characterized in that**
powder or wire are used as the starting material of the coating for the thermal spraying process, and this starting material is applied to the surface to be coated by means of arc spraying or by means of plasma spraying.

## Revendications

1. Procédé de fabrication de revêtements résistant à l'usure sur un corps de base métallique, en particulier en métal léger, **caractérisé par** les étapes suivantes:
- dépolissage mécanique de la surface à revêtir sur le corps de base métallique, en pratiquant des rayures par tournage ou fraisage dans la surface à revêtir, dans lequel les rayures présentent des flancs au moins en partie approximativement perpendiculaires et la profondeur des rayures vaut 0,02 à 0,5 mm et la distance des rayures vaut 0,05 à 1 mm,
- nettoyage et dépolissage de la surface à revêtir au moyen d'un faisceau laser, dans lequel on pratique avec le faisceau laser des contre-dépouilles dans les flancs approximativement perpendiculaires des rayures, dans lequel le faisceau laser agit sous un angle oblique sur la surface à revêtir, et
- dépôt d'un revêtement résistant à l'usure au moyen d'un procédé de pulvérisation à chaud.

2. Procédé selon la revendication 1, **caractérisé en ce que** la profondeur des rayures vaut 0,05 à 0,1 mm pour une largeur de rayure de 0,05 à 0,080 mm et une distance des rayures de 0,1 à 0,150 mm.

3. Procédé selon l'une quelconque des revendications précédentes, **caractérisé en ce que** le traitement par le faisceau laser de la surface à revêtir est effectué immédiatement avant le dépôt du revêtement, en particulier en une opération.

4. Procédé selon l'une quelconque des revendications précédentes, **caractérisé en ce que** le faisceau laser est pulsé.

5. Procédé selon la revendication 4, **caractérisé en ce que** la fréquence de pulsation vaut 10 à 50 kHz.

6. Procédé selon l'une quelconque des revendications précédentes, **caractérisé en ce que** le faisceau laser agit sur la surface à revêtir sous un angle de 20° à 60°.

7. Procédé selon l'une quelconque des revendications précédentes, **caractérisé en ce que** le faisceau laser agit sur la surface à revêtir sous différents angles.

8. Procédé selon l'une quelconque des revendications précédentes, **caractérisé en ce que** l'on utilise de la poudre ou du fil comme matière première du revêtement lors du procédé de pulvérisation à chaud, et on dépose cette matière première sur la surface à revêtir par pulvérisation à l'arc électrique ou par pulvérisation au plasma.
